# EUROPEAN PATENT APPLICATION

(11) **EP 3 266 591 A1**
(43) Date of publication of application: **10.01.2018**
(21) Application number: 17176944.1
(22) Date of filing: 20.06.2017
(51) Int. Cl.: B29C 65/18, B65B 51/14

(54) **VALIDATION KIT FOR BAR HEAT-SEALER**

(30) Priority: 07.07.2016 IT 201600070867
(71) Applicant: Euronda SpA, 36030 Montecchio Precalcino (VI) (IT)
(72) Inventor: MOLINARI, Mario, 36040 Brendola (VI) (IT); OLIVA, Daniele, 36030 Caltrano (VI) (IT)
(74) Representative: Marchioro, Paolo

(57) **Abstract**

Validation kit (1) for bar heat-sealers (100) comprising:
a) a pressure sensor (3) having a lamellar-like end (31), preferably flexible, configured so that it can be arranged between the sealer bars (101, 102) of a bar heat-sealer (100);
b) electronic processing means (2) operatively connected to the pressure sensor (3) and configured to detect a pressure value (P) by means of the pressure sensor (3) and for displaying the pressure value (P) detected by means of a display (21).

## Description

The present invention regards a validation kit for bar heat-sealers suitable to verify the appropriateness of the functional parameters of the bar heat-sealers so as to obtain a correct heat-sealing operation.

The invention also regards a method for validating the heat-sealing by means of the aforementioned validation kit.

In the medical and dentistry industry there arises the need for using sterile instruments so as to avoid the transmission of infections from one patient to another. Normally, a reusable instrument such as a scalpel is used on one patient and then washed manually or in a thermal disinfector, rinsed, dried and sterilised, preferably with a water vapour autoclave sterilisation procedure. Given that the sterilised instruments are not always used immediately after sterilisation thereof, each single instrument to be sterilised is usually introduced into the autoclave wrapped in a whole and sealed bag which has the purpose of preserving the sterility status at which it was removed from the autoclave. For an appropriate sealing process, normally used are manual or automatic bar heat-sealers in which the bag is placed on a heated bar, and another bar is lowered automatically or manually by the operator to apply a heat-sealing to an edge of the bag so as to seal the instrument to be sterilised therein. As an alternative to the bag, there can be used a tubular sterilisation roll which, similar to the bag sealing process, is placed on a heated bar on a heat-sealer on which another bar must be lowered automatically or manually by the operator to apply a first heat-sealing. Lastly, there is carried out a second heat-sealing parallel to the first and between which the instrument is inserted so as to form a new bag containing the latter. Monitoring and validating the sealing process are crucial to ensure that the wholeness of the heat-sealing is obtained correctly and thus remains up to the time of use of the instrument thus enabling an aseptic performance of the same.

The European EN ISO 11607-2 reference standard sets out the requirements for creating and validating heat-sterilised medical devices packaging processes. Such processes include the format, sealing and assembly of the preformed sterile barrier systems, the sterile barrier systems and the packaging systems. As concerns the validation of the heat-sealing process, it must be carried out at least 3 cm from the edge of the opening side and it must be carried out with pressure, temperature and time indicated by the manufacturer of the bag or tubular roll and it must ensure the resistance required for sterilisation and facilitate the opening of the bag at the same time. Furthermore, the functional parameters of the heat-sealing process, i.e. pressure, temperature and time, must be systematically monitorable and documented so as to be verified and retraced if necessary.

In common processes, most heat-sealers have no device for detecting or verifying the temperature and pressure values at which heat-sealing is carried out, thus the correct performance of the heat-sealing exclusively depends on the expertise, experience and ability of the operator. In other words, the repeatability and precision of use of such instrument is strongly conditioned by the user subject.

Secondly, the impossibility to monitor the heat-sealing process, in particular detecting, validating and recording the time, pressure and temperature functional parameters, does not create grounds for the traceability of these data and thus the protection of the operator performing the process.

Thus, heat-sealers comprising a validation device inside the instrument enabling to monitor the functional parameters, i.e. pressure, temperature and time, regarding the heat-sealing process and the result of the operations carried out, in compliance with the EN ISO 11607-2 standards have been proposed in the recent past with the aim of overcoming the aforementioned drawbacks.

The aforementioned instruments and internal validation devices must be validated through the calibration and certification of the sensors so as to obtain and certify that the aforementioned instruments are installed and operate according to the specific requirements.

Verifying temperature and time values within defined value ranges occurs by respectively using thermometers and time measuring means. Determining the pressure value exerted by the sealer bars is attained by means of load cells that record the weight and thus the force applied by the sealer bars during heat-sealing.

The advantage deriving from the use of a heat-sealer with internal validation device lies in the fact that the operator uses a single instrument for operations aimed at heat-sealing and validating the same. However, the use of these instruments gives rise to some drawbacks outlined below.

A first drawback lies in the fact that the load cells for measuring pressure are housed in the instrument, at contact with the lower heat-sealer bar, and thus in order to be able to perform calibration and verify the correct operation of the sensor the operator must disadvantageously disassemble the instrument, and this operation definitely requires considerable execution times.

Secondly, in case of malfunction of the aforementioned sensor, replacement and calibration must be carried out by disassembling the instrument by suitably skilled personnel, and involving the manufacturer at times.

In other words, when present, the heat-sealing validation devices of the prior art reveal an operative limitation of the user when managing the load cell sensors due to their location in the heat-sealers equipped with an internal validation device.

The aim of the present invention is to overcome all the aforementioned drawbacks.

In particular, one of the advantages of the present invention is to provide a validation kit for bar heat-sealers capable of detecting and validating the pressure, temperature and time sealing functional parameters in heat-sealers that do not comprise an internal validation device.

Another object of the invention is to provide a validation kit for bar heat-sealers capable of enabling obtaining and validating the pressure, temperature and time heat-sealing parameters in bar heat-sealers just like the prior art internal validation devices, but that enables an easy and quick real-time and periodic verification of the pressure sensors, thus enabling avoiding the need for disassembling the instrument.

Last but not least, an object of the invention is to provide a method for validating heat-sealing in bar heat-sealers capable of utilising a validation kit and that the aforementioned method be applicable and repeatable on bar heat-sealers comprising or not comprising an internal heat-sealing validation device. The aforementioned objects are attained by a validation kit for bar heat-sealers according to the main claim.

Further characteristics of the validation kit are outlined in the dependent claims.

The aforementioned objects shall be more apparent from the description of a preferred embodiment of the invention, outlined hereinafter by way of nonlimiting example, with reference to the attached drawings, wherein:
- fig. 1 shows an axonometric schematic view of a preferred embodiment of the validation kit of the invention;

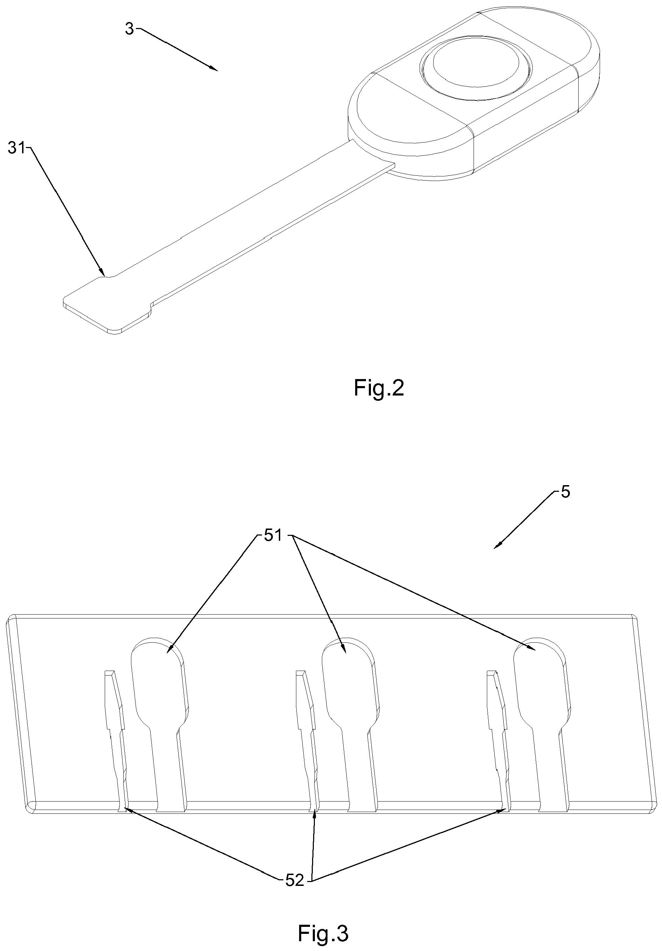

- fig. 2 shows an axonometric schematic view of the detail of the pressure sensor of the validation kit of the invention of fig. 1;
- fig. 3 shows a top schematic view of the detail of the centring support of the validation kit of the invention of fig. 1;
- fig. 4 shows, in a schematic view and in a detail of such schematic view, a heat-sealer with the sealer bars open and with the centring support, the pressure sensor and the temperature sensor applied;
- fig. 5 shows, in a schematic view and in a detail of such schematic view, a heat-sealer with the sealer bars closed and with the centring support, the pressure sensor and the temperature sensor applied;

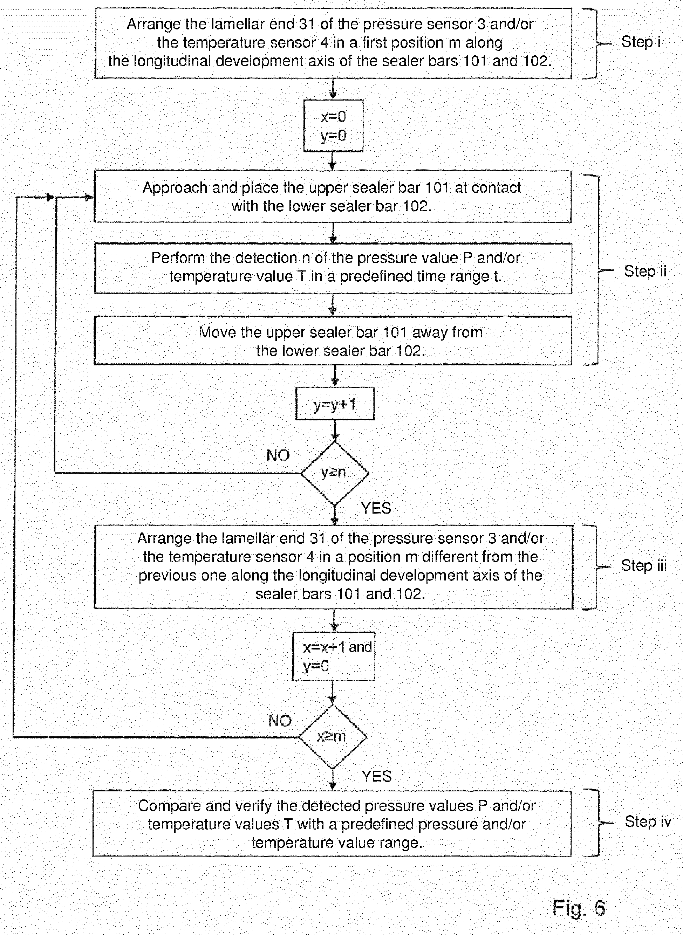

- fig. 6 shows a flow chart of the various steps of the validation method according to the invention.

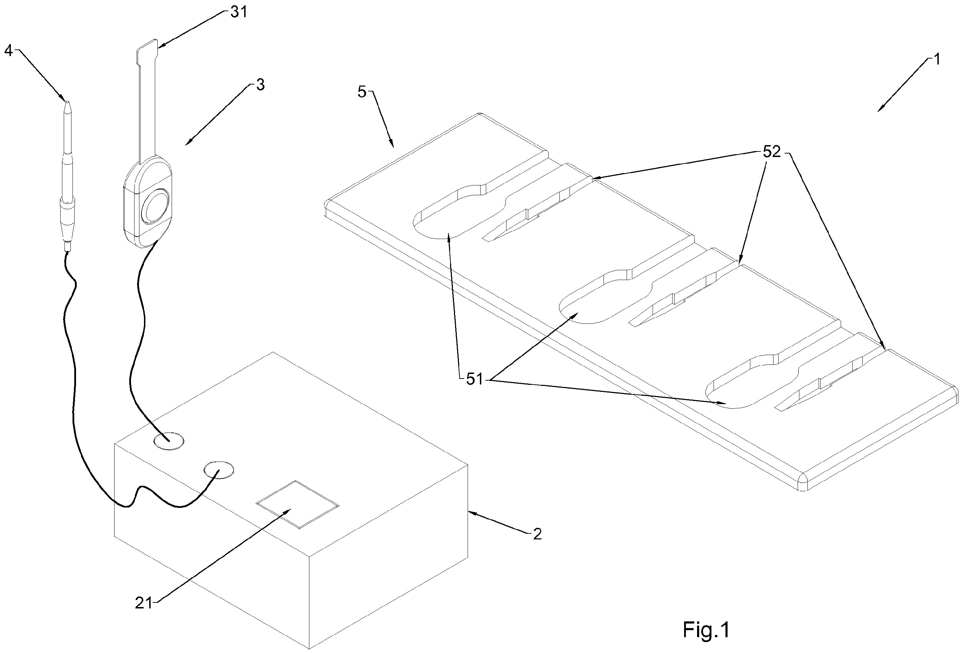

The validation kit for bar heat-sealers is represented in fig. 1 where it is indicated in its entirety with **1.**

As observable in the aforementioned figure, the validation kit **1** comprises a pressure sensor **3** having a lamellar-like end **31.** Advantageously, the lamellar shape of the aforementioned end **31** enables positioning the same between the sealer bars **101** and **102** of a heat-sealer **100** so as not to hinder contact between the sealer bars **101** and **102** during the heat-sealing process. Furthermore, the use of the pressure sensor **3** located outside the heat-sealer **100** enables the user to carry out the operations for calibrating, verifying the correct functionality and possibly replacing the pressure sensor **3** without having to disassemble the instrument, this operation requiring considerable execution times.

According to the preferred embodiment of the invention, such end **31** is of the flexible lamellar type so as to enable better adaptation of the end to the profile of the sealer bars **101** and **102** and thus further facilitating the positioning of the end along the longitudinal axis of the sealer bars **101** and **102** of a bar heat-sealer **100.**

However, according to different embodiments of the invention it cannot be ruled out that such lamellar end **31** can be of the rigid type.

The validation kit **1** of the invention further comprises electronic processing means **2** operatively connected to the pressure sensor **3** and configured to detect a pressure value **P** by means of the pressure sensor **3** and for displaying the pressure value **P** detected by means of a display **21** belonging to the electronic processing means **2.**

In particular, according to the preferred embodiment of the invention, the electronic processing means **2** are configured to compare the pressure value **P** detected by the pressure sensor **3** with a predefined pressure value range. Advantageously, according to the preferred embodiment of the invention, the electronic processing means **2** are also configured to enable the operator to set such predefined pressure value range so as to define - for each utilised sterilising bag and/or roll model of a same manufacturer or different manufacturers - the corresponding and correct pressure value range, indicated by the sterilising bag and/or roll manufacturer, within which the heat-sealing process is to be performed.

Furthermore, still advantageously, according to the preferred embodiment of the invention, the electronic processing means **2** are set to indicate the correspondence of the pressure value **P** detected by the pressure sensor **3** with such predefined pressure value range so that the pressure functional parameter is verified and validated during the heat-sealing process. Still according to the preferred embodiment of the invention, the electronic processing means **2** are configured to visually and/or acoustically alert the operator should the pressure value **P** not be correctly comprised in such predefined pressure value range following the aforementioned comparison of the pressure value **P** with the predefined pressure value range. In particular, according to the preferred embodiment of the invention, such alert can be of the visual type, preferably by means of the blinking of the pressure value **P** on the display **21,** and/or of the acoustic type, preferably by means of a sound alarm.

However, according to different embodiments of the invention, the possibility of not being able to set a predefined pressure value range cannot be ruled out.

In addition, it cannot be ruled out that the electronic processing means **2** are not configured to perform the aforementioned comparison between the detected pressure value **P** and a predefined pressure value range.

Still, it cannot be ruled out that the electronic processing means **2** do not have a visual and/or acoustic alarm system and that the verification of the appropriateness of the pressure value **P** detected in the heat-sealing process be carried out by the operator.

The validation kit **1,** according to the preferred embodiment of the invention, further comprises a temperature sensor **4** suitable to be kept at contact with or in proximity of the sealer bars **101** and **102** of a heat-sealer **100** and operatively connected to the electronic processing means **2.** The electronic processing means **2** are in turn configured to detect a temperature value **T** by means of a temperature sensor **4** and display such detected temperature value **T** by means of a display **21.**

Advantageously, the fact that in the validation kit **1** of the invention there is a temperature sensor **4** capable of detecting the temperature value **T** and that this value is displayed by means of the display **21** enables the operator to verify the temperature value at which the heat-sealing process as well as the pressure value **P** in real time.

However, according to different embodiments of the invention it cannot be ruled out that such temperature sensor **4** be absent.

In particular, according to the preferred embodiment of the invention, the electronic processing means **2** are configured to compare the temperature value **T** detected by the temperature sensor **4** with a predefined temperature value range.

Advantageously, according to the preferred embodiment of the invention, the electronic processing means **2** are also configured to enable the operator to set such predefined temperature value range so as to define - for each utilised sterilising bag and/or roll model of a same manufacturer and/or different manufacturers - the corresponding and correct temperature value range, indicated by the sterilising bag and/or roll manufacturer, within which the heat-sealing process is to be performed.

Furthermore, still advantageously, according to the preferred embodiment of the invention, the electronic processing means **2** are set to indicate whether the temperature value **T** detected by the temperature sensor **4** falls within the predefined temperature value range so that the temperature functional parameter is verified and validated during the heat-sealing process. In particular, still according to the preferred embodiment of the invention, the electronic processing means **2** are configured to visually and/or acoustically alert the operator should the temperature value **T** not be correctly comprised in such predefined temperature value range following the aforementioned comparison of the temperature value **T** with the predefined temperature value range. In particular, according to the preferred embodiment of the invention, such alert can be of the visual type, preferably by means of the blinking of the temperature value **T** on the display **21,** and/or of the acoustic type, preferably by means of a sound alarm.

However, according to different embodiments of the invention, the possibility of not being able to set a predefined temperature value range cannot be ruled out.

In addition, it cannot be ruled out that the electronic processing means **2** are not configured to perform the aforementioned comparison between the detected temperature value **T** and a predefined temperature value range.

Still, it cannot be ruled out that the electronic processing means **2** do not have a visual and/or acoustic alarm system and that the verification of the appropriateness of the temperature value **T** detected in the heat-sealing process be carried out by the operator.

According to the preferred embodiment of the invention, the electronic processing means **2** of the validation kit **1** are configured to detect the pressure **P** and/or temperature **T** values for a predefined time range **t.**

Preferably but not necessarily, such electronic processing means **2** are configured to enable the operator to set at least such predefined time range **t** so as to define - for each utilised sterilising bag and/or roll model of a same manufacturer and/or different manufacturers - the time range **t,** indicated by the sterilising bag and/or roll manufacturer, within which the heat-sealing process is to be performed.

The validation kit **1,** according to the preferred embodiment of the invention indicated in fig. 1, further comprises a centring support **5** suitable to be applied on a bar heat-sealer **100** in proximity of the sealer bars **101** and **102.**

In particular, the centring support **5** comprises one or more first housings **51** suitable to receive the pressure sensor **3** in at least one, preferably two, even more preferably three, fixed positions along the longitudinal development direction of the sealer bars **101** and **102.** Advantageously, in the embodiment of the invention comprising three first housings **51,** the aforementioned housings, preferably two, are positioned laterally and one is preferably positioned centrally along the longitudinal direction of the sealer bars **101** and **102.** Such characteristic enables displacing the pressure sensor **3** along the sealer bar **102** in fixed positions and carry out repeatable pressure value **P** detections.

Furthermore, still advantageously, such distribution of the housings enables positioning the pressure sensor **3** and detecting the pressure value **P** along the entire length of the sealer bars **101** and **102** so as to verify and validate the heat-sealing process along the entire heat-sealing extension.

Preferably but not necessarily, the centring support **5** further comprises one or more second housings **52** for receiving the temperature sensor **4** in at least one, preferably two, even more preferably three, fixed positions along the longitudinal development direction of the sealer bars **101** and **102.** Advantageously, in the embodiment of the invention comprising three second housings **52,** the aforementioned housings, preferably two, are positioned laterally and one is preferably positioned centrally along the longitudinal direction of the sealer bars **101** and **102.** Such characteristic enables displacing the temperature sensor **4** along the sealer bars **101** and **102** in fixed positions and carry out repeatable temperature value **T** detections. Furthermore, still advantageously, such distribution of the second housings **52** enables positioning the temperature sensor **4** and detecting the temperature value **T** along the entire length of the sealer bars **101** and **102** so as to verify and validate the heat-sealing process along the entire heat-sealing extension. However, in an alternative embodiment of the invention, it cannot be ruled out that the second housings **52** can be absent and that the temperature sensor **4** be arranged on the centring support **5** in the first housings **51,** preferably simultaneously with the pressure sensor **3** so as to perform the detections of the pressure and temperature values during the heat-sealing process.

As regards the detections of the pressure and/or temperature values, to be deemed performable in presence and absence of the centring support **5** and/or of the first and second housings **51** and/or **52,** in alternative embodiments of the invention it cannot be ruled out that the detections can be advantageously saved on external memory devices such as SD cards and/or electronic processing means **2** both directly connected to a PC or a tablet or a smartphone or any other electronic device for processing data through Ethernet and/or WiFi for an immediate transfer of the heat-sealing data, so as to be easily preserved and traceable whenever required.

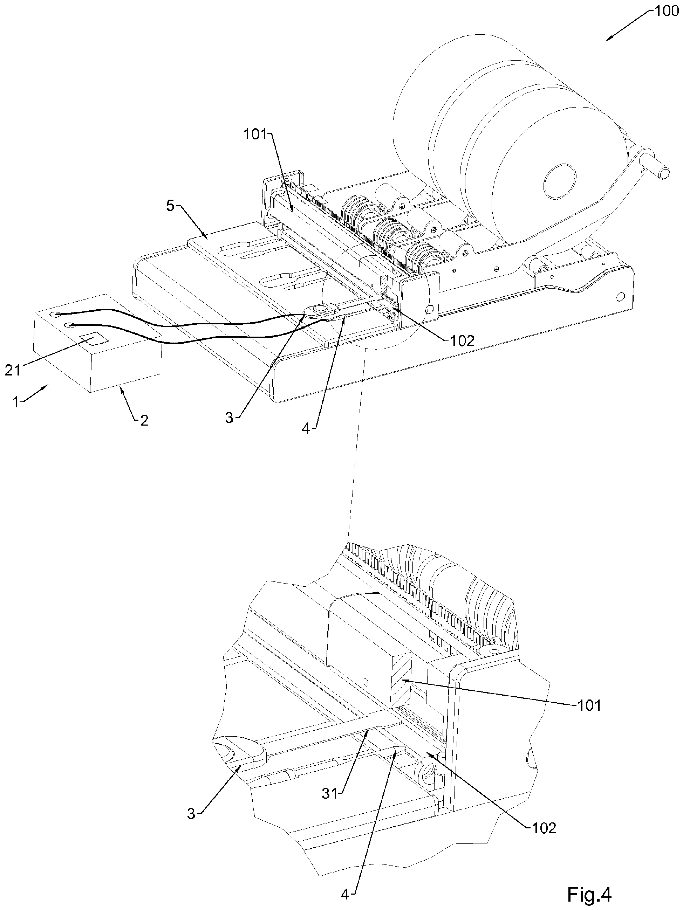

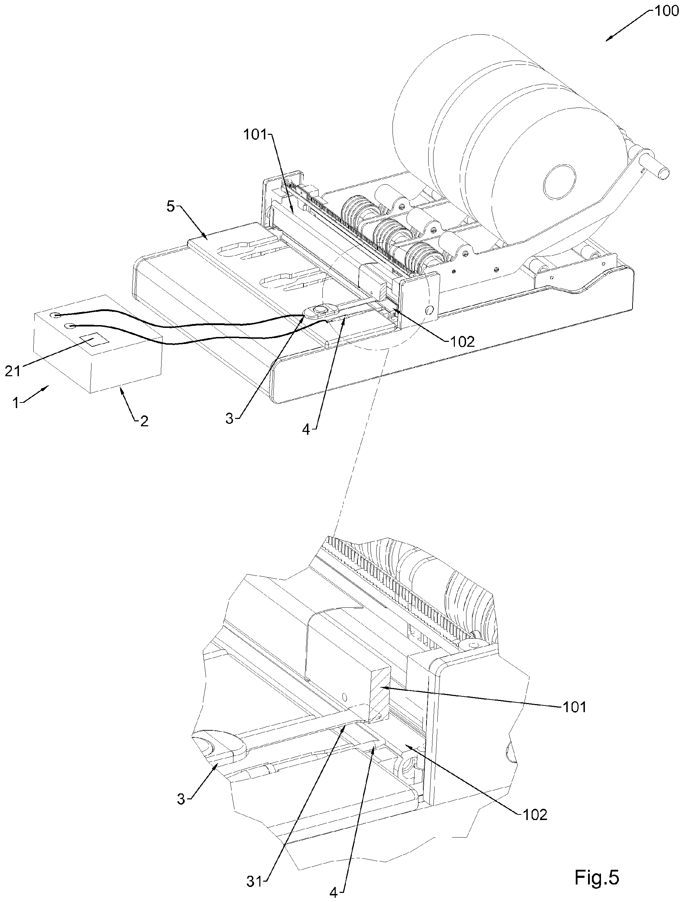

A method for validating at least one functional parameter of a bar heat-sealer **100** is also part of the invention. According to the invention, such method is implemented by using the validation kit **1** according to the preferred embodiment or according to the alternative embodiments described above. Said method provides - as concerns at least one, preferably two, even more preferably three, positions **m** along the longitudinal development axis of the sealer bars **101** and **102 -** for:
i) arranging the lamellar end **31** of the pressure sensor **3** between the sealer bars **101** and **102,** as observable in fig. 4;
ii) approaching and placing the sealer bars **101** and **102** at contact with each other and performing at least one, preferably three, even more preferably five detections **n** of the pressure value **P** using the pressure sensor **3,** as indicated in fig. 5;
iii) moving the sealing bars **101** and **102** away.

Advantageously, with the aforementioned validation method there are carried out a number **n** of detections of the pressure value **P,** so as to enable the performance of an analysis of the pressure value **P** detected at different points **m** along the entire length of the sealer bars **101** and **102** that is statistically significant, repeatable and appropriate and thus obtain a homogeneous estimation of such value. In particular, an advantage arising from the aforementioned method lies in that such method can be comparably applied on bar heat-sealers **100** comprising an internal device for validating the heat-sealing or without the internal device.

Preferably, before step i), the method of the invention provides for arranging a centring support **5** in proximity of the sealer bars **101** and **102** of the bar heat-sealer **100.**

In particular, on such centring support **5** there is arranged the pressure sensor **3** at one of the first housings **51** suitable to receive the aforementioned pressure sensor **3.** As previously described, the first housings **51** are arranged in at least one, preferably two, even more preferably three fixed positions along the longitudinal development direction of the sealer bars **101** and **102.** Advantageously, in the embodiment of the method of the invention, after performing a first detection of the pressure value **P** for a first fixed position, such pressure sensor **3** is displaced on one of the first housings **51** different from the previous one, so as to perform a new detection of the pressure **P** functional parameter on a second fixed position. Advantageously, the use of a centring support **5** enables performing repeatable pressure **P** detections along the sealer bar **102** in predefined fixed positions.

Furthermore, still advantageously, the positioning of the pressure sensor **3** on the housings of the centring support **5** enables detecting the pressure value **P** along the entire length of the sealer bars **101** and **102** so as to verify and validate the heat-sealing process along the entire heat-sealing extension.

Last but not least advantage, the use of a centring support **5** during the execution of the method of the invention enables verifying the pressure value **P** on fixed and repeatable positions along the sealer bars **101** and **102** regardless of the model and the type of heat-sealer used.

Preferably, step i) provides for also arranging the temperature sensor **4** at contact with or in proximity of the sealer bars **101** and **102** and in step ii) to perform at least one, preferably three, even more preferably five detections **n** of the temperature value **T** by means of the temperature sensor **4,** alongside the (at least one) detection of the pressure value **P** by means of the pressure sensor **3.**

If the detection of the pressure **P** and temperature **T** values occurs simultaneously, there is advantageously allowed an immediate and co-localised verification and analysis of several functional parameters regarding the heat-sealing process.

Preferably but not necessarily, when the centring support **5** is provided for before step i), the temperature sensor **4** is positioned in one of the second housings **52** of the centring support **5** suitable to receive such temperature sensor **4** in at least one fixed position along the longitudinal development direction of the sealer bars **101** and **102.** Advantageously, in the embodiment of the invention the centring support **5** comprises three second housings **52,** where preferably two of such second housings **52** are positioned laterally and, preferably, one is positioned centrally along the longitudinal direction of the sealer bars **101** and **102.** Such characteristic enables displacing the temperature sensor **4** along the sealer bars **101** and **102** in fixed positions and carry out repeatable temperature value **T** detections during the execution of the method of the invention.

Furthermore, still advantageously, the positioning of the temperature sensor **4** and the detection of the temperature value **T** along the entire length of the sealer bars **101** and **102** enables verifying and validating the heat-sealing process along the entire heat-sealing extension.

However, according to different embodiments of the invention, it cannot be ruled out that the detection of the temperature value **T** by means of a temperature sensor **4** does not occur and/or that the detection of such value occurs separately from the detection of the pressure value **P.**

According to the preferred embodiment of the invention, the detections **n** of the pressure **P** and/or temperature **T** values are carried out for a predefined time range **t.**

In the preferred embodiment of the method according to the invention, after step iii), there is added step iv) in which the pressure **P** and/or temperature **T** values detected by means of pressure **3** and/or temperature **4** sensors are compared with a predefined pressure and/or temperature value range. Advantageously, such final comparison step enables the operator to verify the functional parameter values, i.e. pressure, temperature and time, and validate the appropriateness thereof.

Thus, in light of the above, the validation kit for bar heat-sealers subject of the invention attains all pre-set objects.

In particular, the object of providing a validation kit for bar heat-sealers capable of detecting and validating the heat-sealing functional parameters, i.e. pressure, temperature and time, in heat-sealers that do not comprise an internal validation device is attained.

The object of the invention of providing a validation kit for bar heat-sealers capable of enabling detecting and validating heat-sealing functional parameters comparable to the internal validation devices, but that enables an easy and quick real-time and periodic verification of the pressure sensors, thus enabling avoiding the need for disassembling the instrument is also attained. Lastly, the object of providing a method for validating heat-sealing in heat-sealers that is applicable and repeatable on bar heat-sealers comprising or not comprising an internal device for validating the heat-sealing is attained.

## Claims

1. Validation kit (1) for bar heat-sealers (100) **characterised in that** it comprises:
a) a pressure sensor (3) having at least one lamellar-like end (31), preferably flexible, configured so that it can be arranged between the sealer bars (101, 102) of at least one of said bar heat-sealers (100);
b) electronic processing means (2) operatively connected to said pressure sensor (3) and configured to detect a pressure value (P) by means of said pressure sensor (3) and for displaying said pressure value (P) detected by means of a display (21).

2. Validation kit (1) according to claim 1), **characterised in that** said electronic processing means (2) are configured for comparing said pressure value (P) detected by said pressure sensor (3) with a predefined pressure value range.

3. Validation kit (1) according to any one of the preceding claims, **characterised in that** it comprises a temperature sensor (4) suitable to be placed at contact with or in proximity of said sealer bars (101, 102) and operatively connected to said electronic processing means (2), said electronic processing means (2) being configured to detect a temperature value (T) by means of said temperature sensor (4) and for displaying said detected temperature value (T) by means of said display (21).

4. Validation kit (1) according to claim 3), **characterised in that** said electronic processing means (2) are configured for comparing said temperature value (T) detected by said temperature sensor (4) with a predefined temperature value range.

5. Validation kit (1) according to any one of the preceding claims, **characterised in that** said electronic processing means (2) are configured for detecting said pressure (P) and/or temperature (T) values for a predefined time range (t).

6. Validation kit (1) according to any one of the preceding claims, **characterised in that** it comprises a centring support (5) suitable to be applied on said heat-sealers (100) in proximity of said sealer bars (101, 102) and comprising one or more first housings (51) for receiving at least said pressure sensor (3) in at least one fixed position along the longitudinal development direction of said sealer bars (101, 102).

7. Validation kit (1) according to claim 6), **characterised in that** said centring support (5) further comprises one or more second housings (52) for receiving said temperature sensor (4) in at least one fixed position along the longitudinal development direction of said sealer bars (101, 102).

8. Method for validating at least one functional parameter of a bar heat-sealer (100) using a validation kit (1) according to any one of the preceding claims, said method providing for at least one position (m) along the longitudinal development axis of said sealer bars (101, 102), for:
i) arranging at least said lamellar end (31) of said pressure sensor (3) between said sealer bars (101, 102);
ii) approaching and placing said sealer bars (101, 102) at contact with each other and performing at least one detection (n) of said pressure value (P) by means of said pressure sensor (3);
iii) moving said sealer bars (101, 102) away.

9. Validation method according to claim 8) using a validation kit (1) according to claim 3 or according to any one of claims 4 to 7 combined with claim 3, **characterised in that** in step i) it also provides for arranging said temperature sensor (4) at contact with or in proximity of said sealer bars (101, 102) and in step ii) performing at least one detection of said temperature value (T) by means of said temperature sensor (4), simultaneously with said at least one detection (n) of said pressure value (P) by means of said pressure sensor (3).

10. Validation method according to any one of claims 8) or 9), **characterised in that** said detections (n) of said pressure (P) and/or temperature (T) values are carried out for a predefined time range (t).

11. Validation method according to any one of claims 8) to 10), **characterised in that** it comprises a step iv) that provides for comparing said pressure (P) and/or temperature (T) values detected by means of said pressure (3) and/or temperature (4) sensors with a predefined pressure and/or temperature value range.
